(19) Europäisches Patentamt
European Patent Office
Office européen des brevets

(11) **EP 4 311 103 B1**

(12) **EUROPEAN PATENT SPECIFICATION**

(45) Date of publication and mention
of the grant of the patent:
**04.12.2024 Bulletin 2024/49**

(51) International Patent Classification (IPC):
**H02P 13/06** (2006.01)    **H02J 3/18** (2006.01)
**G05F 1/14** (2006.01)    **H02J 3/12** (2006.01)

(21) Application number: **23382709.6**

(52) Cooperative Patent Classification (CPC):
**H02J 3/1878; G05F 1/14; H02J 3/12; H02P 13/06**

(22) Date of filing: **11.07.2023**

(54) **DYNAMIC DETERMINATION METHOD OF THE REFERENCE VALUE OF AN AUTOMATIC VOLTAGE REGULATOR OR CONTROLLER**

DYNAMISCHES BESTIMMUNGSVERFAHREN DES REFERENZWERTES EINES AUTOMATISCHEN SPANNUNGSREGLERS ODER -REGLERS

PROCÉDÉ DE DÉTERMINATION DYNAMIQUE DE LA VALEUR DE RÉFÉRENCE D'UN RÉGULATEUR OU CONTRÔLEUR DE TENSION AUTOMATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **12.07.2022 ES 202230638**

(43) Date of publication of application:
**24.01.2024 Bulletin 2024/04**

(73) Proprietor: **Ormazabal Corporate Technology, A.I.E.**
**48340 Amorebieta-Etxano (Vizcaya) (ES)**

(72) Inventors:
• **RIBOTE IKER, García**
**48340 AMOREBIETA-ETXANO (Vizcaya) (ES)**
• **ORTIZ DE ZARATE ABRISKETA, Ainhoa**
**48340 AMOREBIETA-ETXANO (Vizcaya) (ES)**
• **DEL RÍO ETAYO, Luis**
**48340 AMOREBIETA-ETXANO (Vizcaya) (ES)**

(74) Representative: **Herrero & Asociados, S.L.**
**Edificio Aqua - Agustín de Foxá, 4-10**
**28036 Madrid (ES)**

(56) References cited:
• **BAGHSORKHI SINA SADEGHI ED - RESENER MARIANA ET AL: "A mixed-integer formulation of OLTC dynamics to minimize distribution and subtransmission tap changes induced by wind and solar power variations", ENERGY SYSTEMS, SPRINGER BERLIN HEIDELBERG, BERLIN/HEIDELBERG, vol. 9, no. 3, 14 May 2018 (2018-05-14), pages 793 - 829, XP036549793, ISSN: 1868-3967, [retrieved on 20180514], DOI: 10.1007/S12667-018-0281-0**
• **SALIH SHEMSEDIN NURSEBO ET AL: "On Coordinated Control of OLTC and Reactive Power Compensation for Voltage Regulation in Distribution Systems With Wind Power", IEEE TRANSACTIONS ON POWER SYSTEMS, IEEE, USA, vol. 31, no. 5, 1 September 2016 (2016-09-01), pages 4026 - 4035, XP011620017, ISSN: 0885-8950, [retrieved on 20160817], DOI: 10.1109/TPWRS.2015.2501433**

## Description

### OBJECT OF THE INVENTION

This determination method of the reference value of an automatic voltage regulator or automatic voltage controller for regulating an on-load tap changer device aims to dynamically select at least one phase that allows the reference value to be changed using the automatic voltage regulator or controller to measure the voltage deviation with respect to an optimal setpoint and determine the time that the on-load tap changer device must wait before making a tap change, in such a way that the regulatory limits of voltage in consumers are always met and the decisions are aligned with the strategic objective of the Distribution System Operator.

In the present application, the expression "high voltage" means a voltage greater than 1000 volts, while "low voltage" means a voltage less than 1000 volts.

### BACKGROUND OF THE INVENTION

Maintaining the output voltage of high-voltage electrical equipment, such as transformers, within the allowed or desired margins depending on the load circumstances has traditionally been carried out by changing the transformation ratio of said equipment, so that the relationship between the primary and secondary winding voltages of said electrical equipment changes accordingly.

To do this, high-voltage electrical equipment is provided with a device called a tap changer, which can consist of an off-load or on-load tap changer, that is, the tap changes can be carried out with the electrical equipment de-energized (voltage regulation interrupting the load current) or energized (voltage regulation without interrupting the load current). The tap changer increases or reduces the number of turns of the primary winding, thus changing the transformation ratio, or what is the same, varying the voltage in the secondary winding.

With the advent of smart power grids (Smart Grids), voltage fluctuations have increased in the power grid, especially in distribution networks with a high integration of distributed generation sources (small photovoltaic, wind, cogeneration, etc.) and a large deployment of electric vehicles, which makes electricity grids more unstable. On-load tap changers respond effectively and efficiently to voltage fluctuations in load levels. The use of the on-load tap changer (named with the acronym OLTC from the term "On-Load Tap changer") is common in electrical equipment, such as high/low voltage distribution transformers, whose service cannot be interrupted without seriously harming the operation of the distribution system and with the consequent damage to the users of the distribution network.

The transformer with on-load tap changer allows transforming the voltage level from high voltage to low voltage while automatically regulating the latter within a range compatible with the load to be powered. The on-load tap changer therefore operates automatically, where an automatic voltage regulator (named with the acronym AVR from the term "Automatic Voltage Regulator"), also known as automatic voltage controller (named with the acronym AVC from the term "Automatic Voltage Controller"), it is in charge of giving the pertinent orders to the tap changer in charge of increasing or reducing the number of turns of the primary winding of the transformer to obtain the desired voltage in the secondary winding of the transformer.

The automatic voltage regulator or controller makes the decision to increase or reduce the number of turns based on a control policy or control strategy that it has programmed; these decisions being later communicated to the on-load tap changer. The objective of the control policy is to maintain the voltage of the secondary winding of the transformer as close as possible to an optimal voltage setpoint determined from the setpoint optimization policies or criteria established by the Distribution System Operator, known by the acronym DSO (from the term "Distribution System Operator") or the policies set by the regulatory limits, making the fewest number of tap changes possible in order to maximize the useful life of tap changers, avoiding unnecessary tap changes.

To determine a control policy, it is necessary to measure the voltage deviation from the optimal voltage setpoint and calculate the waiting time before each tap change, relating the deviation from the voltage setpoint and time in a functional way. The voltage deviation from the optimal voltage setpoint is measured from a voltage reference value that is currently continuously measured on a single phase (R, S or T) selected or in the three phases (R, S and T), calculating in the latter case the average voltage measured in the three phases (R, S and T) and taking said average as the value of reference. Within the electrical network, specifically in the energy generation and transmission steps, it is currently continuously measured in a single phase (R, S or T) because the voltage imbalance between phases is minimal and, therefore, measuring one phase is enough since they all have practically the same voltage. However, in the power distribution path or in the distribution networks the imbalance of the voltage between phases is greater and, therefore, the needs vary, the fact of measuring only in one phase (R, S or T) being insufficient or inconvenient.

Selecting a single phase to continuously measure the voltage reference value in that phase can mean that if the least critical phase is selected, the critical phase being understood as the phase that has a voltage value higher or lower than the rest of the phases, the consumers of the other phases can incur overvoltage and/or undervoltage states, that is, the following can occur:

- That the phase with the highest voltage may run a greater risk of entering overvoltage, especially if it is regulated using the phase with the lowest voltage of the three phases as a reference.

- That the phase with the lowest voltage is the one with the greatest risk of going into undervoltage, especially if it is regulated using the phase with the highest voltage of the three phases as a reference.
- That the most critical phase may vary, so that it is no longer the most suitable phase to measure the reference value that is used later to measure the deviation of the voltage with respect to the optimal voltage setpoint and ultimately determine the policy of control to be followed by the automatic voltage regulator or controller.

On the other hand, using the average voltage measured in the three phases as the voltage reference value may have the disadvantage that, if one phase is more critical, the other two phases may affect the average and correct or necessary decisions cannot be taken.

Currently, the selection of the phase or phases (if the average voltages of the three phases is taken as a reference value) is carried out only once, normally when the electrical equipment is installed, and the regulation of the on-load tap changer device is always based on the reference value measured on the selected phase or calculated if all three phases are selected for voltage measurement (the average of the three voltages is calculated and said average voltage is taken as a reference value). This selection of phase/s is unique in time, that is, the single selection of the phase/s and the continuous measurement/calculation of the reference value in said phase/s can cause the aforementioned drawbacks.

## DESCRIPTION OF THE INVENTION

The present invention relates to a determination method of the reference value ($V_{ref}$), such as a voltage reference value, of an automatic voltage regulator or controller for regulating an on-load tap changer device based on to a pre-defined and/or calculated optimal voltage setpoint ($V_{set}$) and based on voltage measurements of the three phases (R, S and T), which aims to solve each and every one of the problems mentioned above.

The method of the invention allows dynamically determining at least one reference value ($V_{ref}$), whereby said reference value ($V_{ref}$) may vary at different times or may be constantly changing. A moment is understood as each instant of time in which an automatic regulation algorithm of the on-load tap changer device evaluates the difference between the reference value ($V_{ref}$) and the optimal voltage setpoint ($V_{set}$) to determine if a tap change is carried out or not.

In this sense, the method includes a dynamically selection step of at least one phase (R, S, T) for measurement and/or calculation of at least one reference value ($V_{ref}$), selecting the phase (R), the phase (S), the phase (T) or the three phases (R, S, T) at each moment to measure and/or calculate the reference value ($V_{ref}$), in such a way that the problems that can arise from selecting a phase (R, S or T) and continuously use as reference value ($V_{ref}$) the measurement of the voltage in the selected phase or by selecting the three phases (R, S and T) and continuously use the average voltage measured in the three phases (R, S and T) as reference value ($V_{ref}$). In short, the selection step of at least one phase (R, S, T) for measurement and/or calculation of at least one reference value ($V_{ref}$) is executed at each instant of application of the automatic regulation algorithm associated with the automatic voltage regulator or controller, which means that the selection of the reference value ($V_{ref}$) is dynamic over time.

The determination method of the voltage reference value ($V_{ref}$) generally comprises the following steps:

- Calculating and/or loading of at least one parameter on the basis of which the potential real deviation of the reference value ($V_{ref}$) with respect to the optimal voltage setpoint ($V_{set}$) can be determined, for example, the measurement error (E), the unbalance between phases (D) or the voltage tolerance (T) associated with the hysteresis control of the automatic regulation algorithm of the on-load tap changer device,
- Calculating the value (C) that determines the potential deviation of the parameter chosen in the previous step with respect to the reference value ($V_{ref}$),
- Determinating the maximum voltage ($V_{sup}$) and minimum voltage ($V_{inf}$) levels, calculated based on the regulatory limits set by the country's regulations and/or the policy established by the Distribution System Operator and/or any other criteria that is related to the voltage limits to be considered in the distribution network,
- A first verification step of whether the optimal voltage setpoint ($V_{set}$) is between the ($V_{sup}$) and ($V_{inf.}$) levels,
- A second verification step of whether the optimal voltage setpoint ($V_{set}$) has a value greater than or equal to the level ($V_{sup}$),
- A third verification step of whether the optimal voltage setpoint ($V_{set}$) has a value lower than the level ($V_{inf}$), and
- Dynamically selecting at least one phase (R, S, T) for measurement and/or calculation of at least one reference value ($V_{ref}$).

## DESCRIPTION OF THE FIGURES

Figure 1.- Shows a block diagram of the determination method of the reference value ($V_{ref}$) of the present invention.

Figures 2a, 2b, 2c.- Show, schematically, various graphs that each represent a simulation example, specifically phase (S) curves obtained after simulating the control using different reference values ($V_{ref}$).

Figure 3.- Shows, schematically, the number of tap changes resulting per phase (S) depending on the method used to measure and/or calculate the reference value ($V_{ref}$).

## PREFERRED EMBODIMENT OF THE INVENTION

An example of a preferred embodiment is described below, making reference to the aforementioned figures, without this limiting or reducing the scope of protection of the present invention.

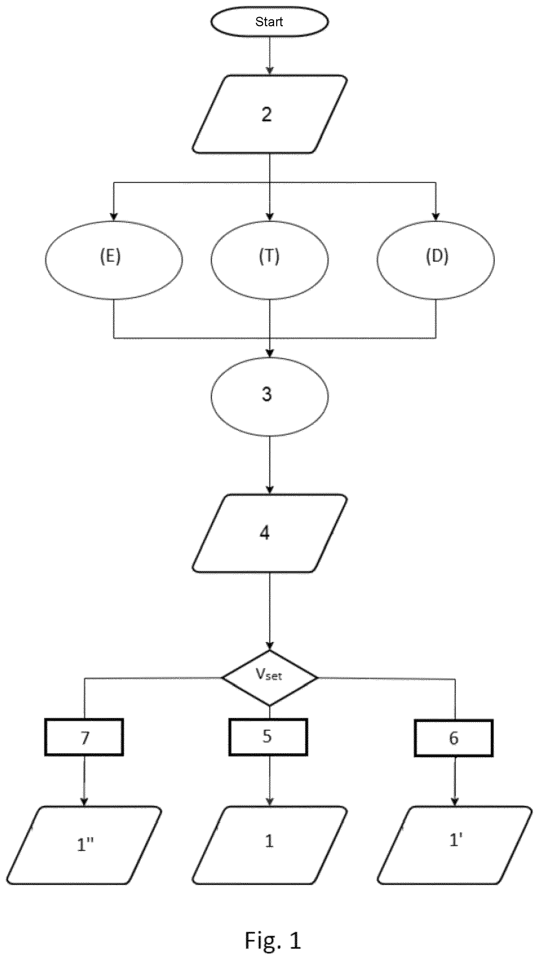

Figure 1 shows a determination method of the reference value ($V_{ref}$) of an automatic voltage regulator or controller for regulating an on-load tap changer device based on an optimal voltage setpoint ($V_{set}$) pre-defined and/or calculated and based on voltage measurements of the three phases (R, S and T), for application in transformers with on-load tap changer device.

The method of the invention comprises a series of steps that, when executed, allow to dynamically select at least one phase (R, S, T) to measure and/or calculate at least one reference value ($V_{ref}$), so that the reference value ($V_{ref}$) can vary at different moments, understanding the term moment as each instant of time in which an automatic regulation algorithm of the on-load tap changer device evaluates the difference between the reference value ($V_{ref}$) and the optimal voltage setpoint ($V_{set}$) to determine whether a tap change is performed or not.

The objective of dynamically measuring and/or calculating a reference value ($V_{ref}$) is to be able to perform a more precise measurement of the voltage deviation at any time with respect to the optimal voltage setpoint ($V_{set}$) and to calculate the time waiting time before each tap change, with the ultimate goal of maintaining the voltage of the secondary winding of the transformer as close as possible to said optimal voltage setpoint ($V_{set}$) and making the fewest possible tap changes, as well as the one of reduce over- and under-voltage events.

To do this, as shown in Figure 1, the method comprises the following steps:

- Calculating and/or loading (2) at least one parameter that can determine the potential real deviation of the reference value ($V_{ref}$) with respect to the optimal voltage setpoint ($V_{set}$), for example, the measurement error (E), the imbalance between phases (D) or voltage tolerance (T) associated with the hysteresis control of the automatic regulation algorithm of the on-load tap changer device,
- Calculating (3) the value (C) that determines the potential deviation of the parameter chosen in the previous step with respect to the reference value ($V_{ref}$),
- Determinating (4) the maximum voltage ($V_{sup}$) and minimum voltage ($V_{inf}$) levels, calculated based on the regulatory limits set by the country's regulations and/or the policy established by the Distribution System Operator and/or any other relevant criteria related to the voltage limits to be considered in the distribution network,
- A first verification step (5) of whether the optimal voltage setpoint ($V_{set}$) is between the levels ($V_{sup}$) and ($V_{inf.}$),
- A second verification step (6) of whether the optimal voltage setpoint ($V_{set}$) has a value greater than or equal to the level ($V_{sup}$),
- A third verification step (7) of whether the optimal voltage setpoint ($V_{set}$) has a value lower than the level ($V_{inf}$), and
- Dynamically selecting (1, 1', 1") at least one phase (R, S, T) for measurement and/or calculation of at least one reference value ($V_{ref}$).

In the determination step (4) of the maximum voltage ($V_{sup}$) and minimum voltage ($V_{inf}$) levels, the regulatory limits between which the voltage must be maintained (normally, in Spain, 230V $\pm$7%) and a value (C) made up of the measurement error (E), the imbalance between phases (D) and/or the voltage tolerance (T).

Therefore, once the calculating and/or loading step (2) of at least one parameter (E, D, T) has been executed, the calculation step (3) of the value (C) is executed, which determines the potential deviation of the reference value ($V_{ref}$):

$$C = E + D + T$$

Once the value (C) has been calculated in the calculation step (3), the determination step (4) of the maximum voltage ($V_{sup}$) and minimum voltage ($V_{inf}$) levels is executed. As an example, the regulatory limits established by the regulation in Spain will be taken into account, namely:

$$246.1V = 230 + 7\%$$

$$213.9V = 230 - 7\%$$

So, the maximum voltage ($V_{sup}$) and minimum voltage ($V_{inf}$) levels will be:

$$V_{sup} = 246.1 - C$$

$$V_{inf} = 213.9 + C$$

In the case of another country, the regulatory limits could be different and should be changed to adjust the method.

Subsequently, the verification steps (5, 6, 7) are executed:

- In the first verification step (5) it is verified if the op-

timal voltage setpoint ($V_{set}$) is between the ($V_{sup}$) and ($V_{inf.}$) levels, so that if this premise is met, the selection step (1) of at least one phase (R, S, T) is executed, and for this case the three phases (R, S, T) are selected and the reference value is measured and/or calculated as the average voltage ($V_{avg}$) of the of the three phases (R, S, T) or another statistic capable of capturing the average or most frequent trend of the three phases (R, S, T), such as the median or 50th percentile.

- In the second verification step (6) it is verified if the optimal voltage setpoint ($V_{set}$) has a value greater than or equal to the level ($V_{sup}$), so that if this premise is met, the selection step (1') of at least one phase (R, S, T) is executed, and for this case the phase with the highest voltage value ($V_{max}$) is selected to measure the reference value ($V_{ref}$) or some statistic capable of capturing the highest voltage frequency among the three phases (R, S, T), such as the 95th percentile.

- In the third verification step (7) it is verified if the optimal voltage setpoint ($V_{set}$) has a value lower than the level ($V_{inf}$), so that if this premise is met, the selection step (1") of at least one phase (R, S, T) is executed, and for this case the phase with the lowest voltage value ($V_{min}$) is selected to measure the reference value ($V_{ref}$) or some statistic capable of capturing the lowest voltage frequency among the three phases (R, S, T), such as the 5th percentile.

The following table summarizes the verification steps (5, 6, 7):

| Step | | $V_{ref}$ |
|---|---|---|
| (5) | $V_{inf} < V_{set} < V_{sup}$ | $V_{avg}$ |
| (7) | $V_{set} < V_{inf}$ | $V_{min}$ |
| (6) | $V_{set} \geq V_{sup}$ | $V_{max}$ |

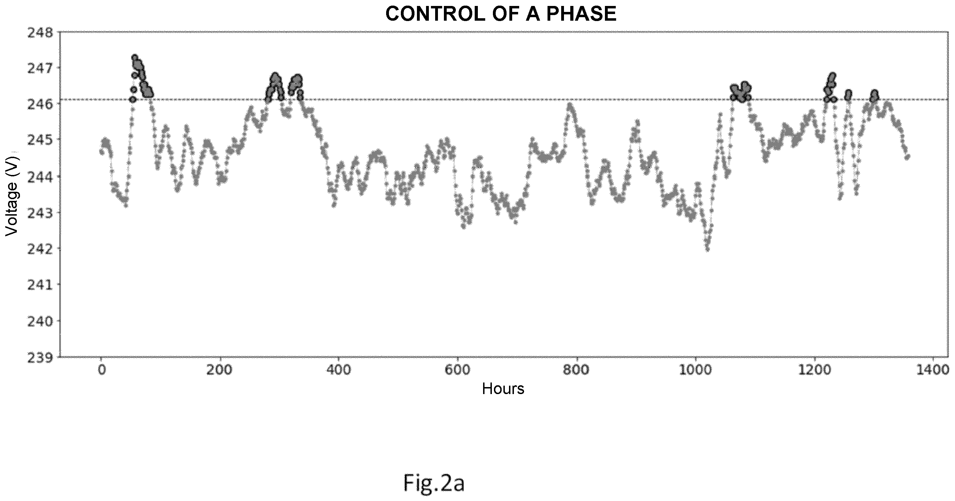

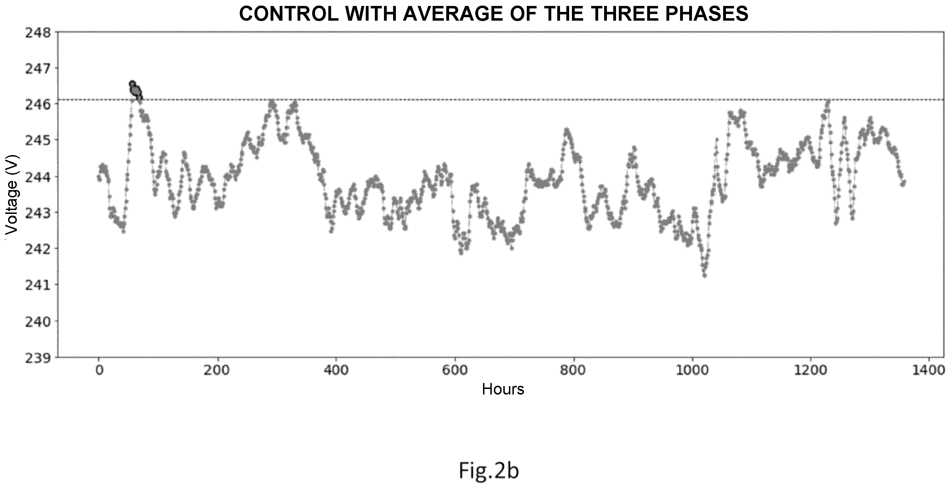

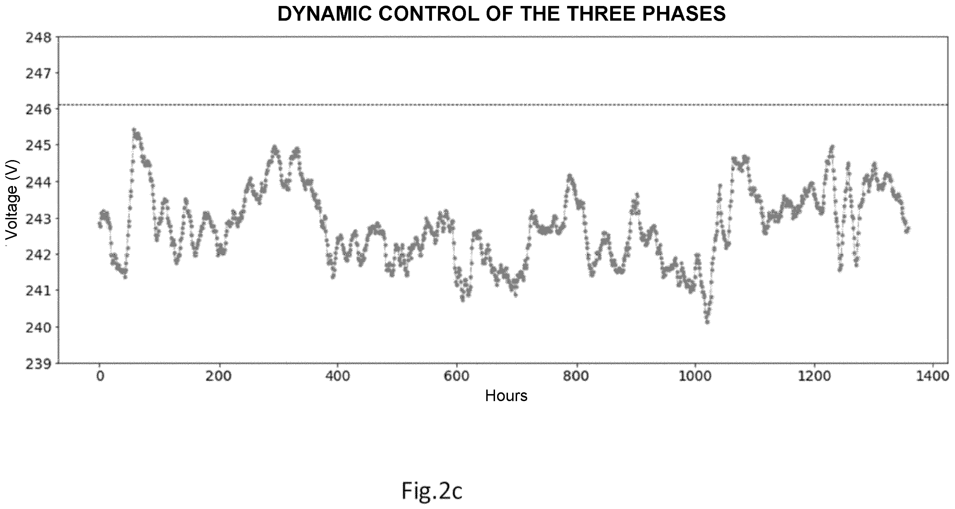

Figures 2a, 2b and 2c show the voltage curve obtained for phase (S) according to the reference value ($V_{ref}$) used by controller of the automatic voltage regulator or controller of the on-load tap changer, in particular, when the reference value ($V_{ref}$) is a phase (R, S or T) (the ($V_{ref}$) is static), using as a reference value ($V_{ref}$) average voltage ($V_{avg}$) of the three phases (R, S, T) and when the reference value ($V_{ref}$) dynamically selects between phases (R, S, or T) and average voltage ($V_{avg}$) of the three phases (R, S, T).

The abscissa axis represents the time course in hours, on the other hand, the ordinate axis determines the voltage level (V). Each measurement is given by a gray point on the graph, the dashed lines that join them are to give a sense of time curve to the graphic representation.

The dashed gray horizontal line represents the upper voltage limit established by the regulatory framework in Spain, that is, 246.1V (230+7%). Any voltage measurements above it are highlighted with a black outline that contrasts with the gray color of normal measurements. These measurements above the regulatory limit pose a risk for customers connected to phase (S), since, for example, if the voltage drop is not sufficient, these users would potentially suffer overvoltages.

Figure 2a represents the voltage curve of phase (S) when the control has been carried out using a single phase (R, S or T) as reference, specifically phase (R). Given the existing imbalance in low voltage networks, on certain occasions, as in this example, one phase (R) is at lower voltage levels than another phase (S). When regulating using said phase (R), and raising the tap using the on-load tap changer to bring it closer to the optimum voltage setpoint ($V_{set}$), there is a risk of raising the voltage of the other phase too high (S). In this way, as can be seen in Figure 2a, the phase (S) repeatedly exceeds the limit of 246.1V, even reaching 247.5V.

Figure 2b represents the voltage curve of the phase (S) when the control uses the average voltage ($V_{avg}$) as reference value of the three phases (R, S, T). As can be seen, on this occasion, the number of moments in which the voltage limit of 246.1V is exceeded is less than the previous case (Fig. 2a). However, not only is it still exceeded, but also, in many moments, it is very close to the regulatory limit.

Finally, Figure 2c shows the voltage curve of the phase (S) when the control has been carried out using a reference value.($V_{ref}$) variable according to the present invention, i.e. the reference value is selected dynamically ($V_{ref}$), switching between a phase (R, S or T) (the optimal) or the average voltage ($V_{avg}$) of the three phases (R, S, T), as appropriate. As can be seen, on this occasion the limit of 246.1V has not been exceeded on any occasion. Also, the curve is much further from the upper limit in general terms.

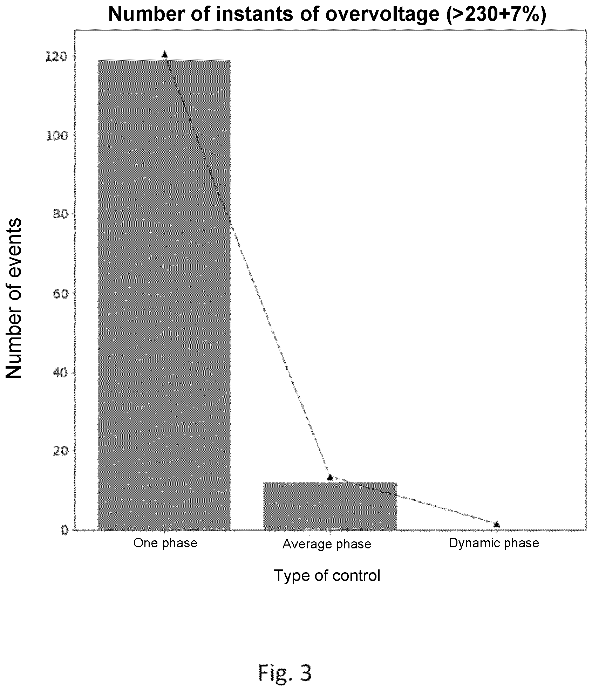

These numbers of times when the regulatory limit is exceeded for each method used to measure and/or calculate the reference value ($V_{ref}$) are represented deterministically in Figure 3. Thus, the comparison can be taken to more precise numerical terms. In particular, for the case of selection of the reference value ($V_{ref}$) equal to one static phase (R, S or T), the regulatory limit for 119 measurements has been exceeded, for the case of using the average voltage ($V_{avg}$) of the three phases (R, S, T), 12 times, and finally for the reference value prompt ($V_{ref}$), the regulatory limit has not been exceeded on any occasion. In Figure 3, the abscissa axis represents the method used to measure and/or calculate the reference value ($V_{ref}$) and the ordinate axis represents the number of events or tap changes.

In conclusion, the method of the invention, which dynamically selects the reference value ($V_{ref}$), is the one with the best performance, since it has been the one that has exceeded the upper limit (246.1V) in fewer occasions.

**Claims**

1.  Dynamic determination method of the reference value ($V_{ref}$) of an automatic voltage regulator and/or controller for regulating an on-load tap changer device based on a pre-defined and/or calculated optimal voltage setpoint ($V_{set}$) and voltage measurements of the three phases (R, S and T), comprising at least one selection step (1, 1', 1") of at least one phase (R, S, T) for measurement and/or calculation of at least one reference value ($V_{ref}$), **characterized in that** the selection step (1, 1', 1") of at least one phase (R, S, T) is executed at each instant of application of an automatic regulation algorithm associated with the automatic voltage regulator and/or controller, selecting at each moment the phase (R), the phase (S), the phase (T) or the three phases (R, S, T) to measure and/or calculate the reference value ($V_{ref}$), so that the reference value ($V_{ref}$) can vary at different times.

2.  Determination method according to claim 1, **characterized in that** it comprises a calculating and/or loading step (2) at least one parameter that can determine the potential real deviation of the reference value ($V_{ref}$) with respect to the voltage setpoint ($V_{set}$).

3.  Determination method according to claim 2, **characterized in that** it comprises a calculation step (3) of the value (C) that determines the potential deviation of the parameter from the reference value ($V_{ref}$).

4.  Determination method according to claim 3, **characterized in that** it comprises a determination step (4) of the levels ($V_{sup}$) and ($V_{inf}$).

5.  Determination method according to claim 4, **characterized in that** it comprises a first verification step (5) of whether the optimal voltage setpoint ($V_{set}$) is between the ($V_{sup}$) and ($V_{inf}$) levels.

6.  Determination method according to claim 5, **characterized in that** in selection step (1) of at least one phase (R, S, T), the three phases (R, S, T) are selected and the reference value is measured and/or calculated as the average voltage ($V_{avg}$) of the three phases (R, S, T) or another statistic capable of capturing the average or most frequent trend of the three phases (R, S, T).

7.  Determination method according to claim 4, **characterized in that** it comprises a second verification step (6) of whether the optimal voltage setpoint ($V_{set}$) has a value greater than or equal to the level ($V_{sup}$).

8.  Determination method according to claim 7, **characterized in that** in selection step (1') of at least one phase (R, S, T), the phase with the highest voltage value ($V_{max}$) is selected or some statistic capable of capturing the highest voltage frequency among the three phases (R, S, T).

9.  Determination method according to claim 4, **characterized in that** it comprises a third verification step (7) of whether the optimal voltage setpoint ($V_{set}$) has a value lower than the level ($V_{inf}$).

10. Determination method according to claim 9, **characterized in that** in the selection step (1") of at least one phase (R, S, T), the phase with the lowest voltage value ($V_{min}$) is selected or some statistic capable of capturing the lowest voltage frequency among the three phases (R, S, T).


**Patentansprüche**

1.  Dynamisches Bestimmungsverfahren des Referenzwerts (Vref) eines automatischen Spannungsreglers und/oder einer automatischen Steuerung zum Regeln einer Laststufenschaltervorrichtung auf der Basis eines vordefinierten und/oder berechneten optimalen Spannungssollwerts (Vset) und von Spannungsmessungen der drei Phasen (R, S und T), aufweisend mindestens einen Auswahlschritt (1, T, 1") mindestens einer Phase (R, S, T) zum Messen und/oder Berechnen mindestens eines Referenzwerts (Vref), **dadurch gekennzeichnet, dass** der Auswahlschritt (1, T, 1") mindestens einer Phase (R, S, T) zu jedem Zeitpunkt der Anwendung eines automatischen Regelungsalgorithmus ausgeführt wird, der dem automatischen Spannungsregler und/oder der automatischen Steuerung zugeordnet ist, wobei zu jedem Zeitpunkt die Phase (R), die Phase (S), die Phase (T) oder die drei Phasen (R, S, T) ausgewählt werden, um den Referenzwert (Vref) zu messen und/oder zu berechnen, so dass der Referenzwert (Vref) zu unterschiedlichen Zeitpunkten variieren kann.

2.  Bestimmungsverfahren nach Anspruch 1, **dadurch gekennzeichnet, dass** es einen Berechnungs- und/oder Belastungsschritt (2) mindestens eines Parameters aufweist, der die mögliche reale Abweichung des Referenzwerts (Vref) in Bezug auf den Spannungssollwert (Vset) bestimmen kann.

3.  Bestimmungsverfahren nach Anspruch 2, **dadurch gekennzeichnet, dass** es einen Berechnungsschritt (3) des Werts (C) aufweist, der die mögliche Abweichung des Parameters von dem Referenzwert (Vref) bestimmt.

4.  Bestimmungsverfahren nach Anspruch 3, **dadurch gekennzeichnet, dass** es einen Bestimmungsschritt (4) der Level (Vsup) und (Vinf) aufweist

**5.** Bestimmungsverfahren nach Anspruch 4, **dadurch gekennzeichnet, dass** es einen ersten Überprüfungsschritt (5) aufweist, ob der optimale Spannungssollwert (Vset) zwischen den Leveln (Vsup) und (Vinf) liegt.

**6.** Bestimmungsverfahren nach Anspruch 5, **dadurch gekennzeichnet, dass** in dem Auswahlschritt (1) mindestens einer Phase (R, S, T) die drei Phasen (R, S, T) ausgewählt werden und der Referenzwert als die Durchschnittsspannung (Vavg) der drei Phasen (R, S, T) oder eine andere Statistik gemessen und/oder berechnet wird, die geeignet ist, den durchschnittlichen oder häufigsten Trend der drei Phasen (R, S, T) zu erfassen.

**7.** Bestimmungsverfahren nach Anspruch 4, **dadurch gekennzeichnet, dass** es einen zweiten Überprüfungsschritt (6) aufweist, ob der optimale Spannungssollwert (Vset) einen Wert aufweist, der größer oder gleich dem Level (Vsup) ist

**8.** Bestimmungsverfahren nach Anspruch 7, **dadurch gekennzeichnet, dass** in dem Auswahlschritt (T) mindestens einer Phase (R, S, T) die Phase mit dem höchsten Spannungswert (Vmax) oder eine Statistik ausgewählt wird, die geeignet ist, die höchste Spannungsfrequenz unter den drei Phasen (R, S, T) zu erfassen.

**9.** Bestimmungsverfahren nach Anspruch 4, **dadurch gekennzeichnet, dass** es einen dritten Überprüfungsschritt (7) aufweist, ob der optimale Spannungssollwert (Vset) einen Wert aufweist, der niedriger als das Level (Vinf) ist.

**10.** Bestimmungsverfahren nach Anspruch 9, **dadurch gekennzeichnet, dass** in dem Auswahlschritt (1") mindestens einer Phase (R, S, T) die Phase mit dem niedrigsten Spannungswert (Vmin) oder eine Statistik ausgewählt wird, die geeignet ist, die niedrigste Spannungsfrequenz unter den drei Phasen (R, S, T) zu erfassen.

**Revendications**

**1.** - Procédé de détermination dynamique de la valeur de référence ($V_{ref}$) d'un régulateur et/ou contrôleur automatique de tension pour réguler un dispositif changeur de prise en charge, basé sur une valeur optimale de consigne de tension prédéfinie et/ou calculée ($V_{set}$) et des mesures de tension des trois phases (R, S et T), comprenant au moins une étape de sélection (1, 1', 1") d'au moins une phase (R, S, T) pour la mesure et/ou le calcul d'au moins une valeur de référence ($V_{ref}$), **caractérisé en ce que** l'étape de sélection (1, 1', 1") d'au moins une phase (R, S, T) est exécutée à chaque instant d'application d'un algorithme de régulation automatique associé au régulateur et/ou contrôleur automatique de tension, en sélectionnant à chaque moment la phase (R), la phase (S), la phase (T) ou les trois phases (R, S, T) pour mesurer et/ou calculer la valeur de référence ($V_{ref}$), de sorte que la valeur de référence ($V_{ref}$) peut varier à différents moments.

**2.** - Procédé de détermination selon la revendication 1, **caractérisé en ce qu'**il comprend une étape de calcul et/ou chargement d'au moins un paramètre qui peut déterminer l'écart réel potentiel de la valeur de référence ($V_{ref}$) par rapport à la valeur de consigne de tension ($V_{set}$).

**3.** - Procédé de détermination selon la revendication 2, **caractérisé en ce qu'**il comprend une étape de calcul (3) de la valeur (C) qui détermine l'écart potentiel du paramètre par rapport à la valeur de référence ($V_{ref}$).

**4.** - Procédé de détermination selon la revendication 3, **caractérisé en ce qu'**il comprend une étape de détermination (4) des niveaux ($V_{sup}$) et ($V_{int}$).

**5.** - Procédé de détermination selon la revendication 4, **caractérisé en ce qu'**il comprend une première étape de vérification (5) du fait que la valeur optimale de consigne de tension ($V_{set}$) est comprise entre les niveaux ($V_{sup}$) et ($V_{int}$).

**6.** - Procédé de détermination selon la revendication 5, **caractérisé en ce que** dans l'étape de sélection (1) d'au moins une phase (R, S, T), les trois phases (R, S, T) sont sélectionnées et la valeur de référence est mesurée et/ou calculée sous forme de la tension moyenne ($V_{avg}$) des trois phases (R, S, T) ou une autre statistique capable de capturer la tendance moyenne ou la plus fréquente des trois phases (R, S, T).

**7.** - Procédé de détermination selon la revendication 4, **caractérisé en ce qu'**il comprend une deuxième étape de vérification (6) du fait que la valeur optimale de consigne de tension ($V_{set}$) a une valeur supérieure ou égale au niveau ($V_{sup}$).

**8.** - Procédé de détermination selon la revendication 7, **caractérisé en ce que** dans l'étape de sélection (1') d'au moins une phase (R, S, T), on sélectionne la phase ayant la plus haute valeur de tension ($V_{max}$) ou une statistique capable de capturer la plus haute fréquence de tension parmi les trois phases (R, S, T).

**9.** - Procédé de détermination selon la revendication 4, **caractérisé en ce qu'**il comprend une troisième étape de vérification (7) du fait que la valeur optimale de consigne de tension ($V_{set}$) a une valeur inférieure au niveau ($V_{inf}$).

10. - Procédé de détermination selon la revendication 9, **caractérisé en ce que** dans l'étape de sélection (1") d'au moins une phase (R, S, T), on sélectionne la phase ayant la plus basse valeur de tension ($V_{min}$) ou une statistique capable de capturer la plus basse fréquence de tension parmi les trois phases (R, S, T).

Fig. 1

CONTROL OF A PHASE

Fig.2a

CONTROL WITH AVERAGE OF THE THREE PHASES

Fig.2b

DYNAMIC CONTROL OF THE THREE PHASES

Fig.2c

EP 4 311 103 B1

Fig. 3